# EUROPEAN PATENT APPLICATION

(11) **EP 4 066 705 A1**
(43) Date of publication of application: **05.10.2022**
(21) Application number: 21166145.9
(22) Date of filing: 31.03.2021
(51) Int. Cl.: A47J 43/044

(54) **PROCESSING UNIT AND HAND BLENDER WITH PROCESSING UNIT**

(71) Applicant: BSH Hausgeräte GmbH, 81739 München (DE)
(72) Inventor: Berzelak, Matej, 3334 Luce (SI); Koscak, Ales, 6230 Postojna (SI); Orbanic, Henri, 1000 Ljubljana (SI); Zlaus, Uros, 3201 Smartno v Rozni dolini (SI)

(57) **Abstract**

Disclosed is a processing unit 10 for/of a hand blender 1. The processing unit comprises a shaft 11, a tool 12 and a casing 13 comprising a pipe portion 14 and a cage 15. The cage 15 confines a cage interior space I and is connected to the pipe portion 14. Therein, the pipe portion 14 is pivotable relative to the cage 15. The shaft 11 at least partially runs through the pipe portion 14 and is rotatable therein about a designated axis X of rotation, and the tool 12 is fixed or fixable to the shaft 11 within the cage interior space I.

Further disclosed is a hand blender 1 comprising such processing unit 10 and a drive unit 21 to which the shaft 11 is coupled or coupleable.

## Description

The present invention concerns a processing unit for or of a hand blender. Moreover, the invention concerns a hand blender with such processing unit.

Hand blenders (also known as "immersion blenders" or "stick blenders") are electric kitchen devices shaped as a stick and designated to grind or mix food. They usually comprise a drive unit and a processing unit with a shaft configured to rotate, within a pipe-like casing and driven by the drive unit, about its longitudinal axis. A tool such as a knife assembly is fixed or fixable to the shaft so as to adopt a rotation thereof. To avoid undesired contact of the rotating tool with a respective receptacle as well as disadvantageous dispersion of the food, the casing typically forms a cage partially encompassing the tool. For instance, such cage may have a funnel-like or a hemisphere-like shape. At a side opposite to the drive unit, the cage is usually open, such that food to be ground can enter the cage in axial direction and reach the rotating tool. Additionally, the cage may have one or more clearances allowing radial entry of the food. The terms "axial" and "radial" and their derivatives in this document are to be understood with respect to the designated axis of rotation of the tool.

It is an object of the present invention to provide a technique facilitating an improved hand blender.

The object is achieved by a processing unit according to claim 1 and a hand blender according to claim 5. Advantageous embodiments are disclosed in the dependent claims, the description and the figures.

A processing unit according to the present invention is a portion of or for a hand blender. The processing unit comprises a shaft, a tool (such as a knife or knife assembly) and a casing. The casing comprises a pipe portion and a cage connected to the pipe portion and confining a cage interior space. The shaft at least partially runs through the pipe portion and is rotatable therein (thus, relative to the pipe portion) about a designated axis of rotation (coinciding with the longitudinal axis of the shaft). In particular, the shaft is coupled or coupleable with a drive unit (such as an electric motor) of the hand blender. Such coupled, the shaft thus is configured to be driven (rotated) by the drive unit. In particular, the shaft may be rotatably supported in the pipe portion by means of at least one ball bearing.

The tool is fixed or fixable to the shaft within the cage interior space; when the tool thus is (permanently or detachably) fixed to the shaft, the shaft thus is configured to transfer a rotation about the designated axis of rotation to the tool. Moreover, the pipe portion is pivotable relative to the cage.

A hand blender according to the present invention comprises a processing unit according to an embodiment of the present invention. Furthermore, the hand blender comprises a drive unit (such as an electric motor). Therein, the shaft of the processing unit is coupled or coupleable with the drive unit (which thus is configured to rotate the shaft and the tool - when this is connected to the shaft - about the designated axis of rotation).

Due to the pivotability of the pipe portion relative to the cage, the present invention facilitates that the cage is configured to take different orientations relative to the pipe portion, in particular to be bent relative to the pipe portion.

Accordingly, *vice versa* the pipe portion - and therewith, the shaft - in particular is enabled to take (various) different angles relative to an edge of the cage. As a consequence, when the tool is fixed to the shaft, the tool can take various positions within the cage interior space. In this way, the tool reaches different regions within the cage interior space, which in utilisation may improve uniformity of the respective food's treatment. For instance, if the cage is set (e.g., with a (possibly waved or serrated) edge of the cage confining the cage interior space) on a surface of a receptacle, by pivoting the pipe portion and, therewith, the shaft included therein relative to the cage (i.e., by inclining the pipe portion relative to said surface), the tool can be tilted within the cage interior space (and relative to said edge / relative to said surface). Thereby, in particular, a suction force around the edge of the cage may be varied, which can provide for an advantageous intrusion of the food into the tool. In particular, the fixed tool may be moved not only along a rotational plane (orthogonal to the designated axis of rotation), but also in a direction having a component perpendicular to such plane. That is, the fixed tool may be moveable in three dimensions.

The hand blender may be one-piece, with the processing unit forming part thereof. In this case, the pipe portion of the processing unit may form part of a housing of the hand blender, the housing further encompassing the drive unit.

Alternatively, the processing unit may be a component of the hand blender, which component may be detachably combinable to a further component of the hand blender. In this case, the processing unit (in particular the pipe portion of its casing) may preferably comprise at least one connection means (such as an element of a bayonet connection and/or a screw thread) for connecting the processing unit with the further component. Such connection means may preferably at least partially be arranged on a pipe portion's side opposite to the cage. In such embodiments, the further component may include a/the drive unit. Combining the processing unit with the further component then preferably comprises coupling the shaft with the drive unit.

To implement the pivotability, the cage may be connected to the pipe portion by means of at least one hinge joint.

According to advantageous embodiments, the cage is connected to the pipe portion by means of a spherical bearing (such as a ball joint). Therewith, a particularly comprehensive tilting of the tool (when fixed to the shaft) within the cage interior space can be achieved, which facilitates a particularly uniform catching and treatment of food in the cage interior space. In particular, with respect to (i.e., starting from) a centre position in which the designated axis of rotation coincides with a centre axis of the cage, the pipe portion is preferably equally pivotable (i.e., pivotable to the same extent) in all directions defined by a plane orthogonal to said centre axis. Therewith, a particularly comfortable utilisation of a hand blender comprising the processing unit is facilitated.

In such embodiments, the cage may form an exterior socket retaining an at least partially spherical joint element of the pipe portion, or *vice versa,* the pipe portion may form an exterior socket retaining an at least partially spherical joint element of the cage.

According to advantageous embodiments of the present invention, the tool permanently fixed to the shaft or the tool when detachably fixed to the shaft (depending on the respective embodiment) is fully contained in the cage interior space in any rotational position of the tool relative to the cage and in any attainable pivot position of the cage relative to the pipe portion. Therewith, a protrusion of the tool (when fixed to the shaft) out of the cage interior space can be inhibited, which protrusion could involve a disadvantageous contact of the tool with a surface of a receptacle the cage may be set on.

With regard to at least one pivot axis about which the pipe portion is pivotable relative to the cage, an extent of the pivoting may be restricted to a maximal pivot angle. In particular, such maximal pivot angle may be at least 10°, at least 15° or at least 20°. Additionally or alternatively, such maximal pivot angle may be at most 50°, at most 35° or at most 30°.

By way of such maximal pivot angle, a stability of the processing unit may be improved. Moreover, the restricted pivot angle may provide for the tool fully remaining in the cage interior space in any accessible position thereof, as mentioned above.

The limitation to the maximal pivot angle may be achieved by at least one surface and/or at least one edge of the pipe portion abutting against at least one surface and/or at least one edge of the cage.

The maximal pivot angle may be measured relative to a centre position of the pipe portion relative to the cage in which the same extent of pivoting is possible to opposite sides. According to advantageous embodiments, the pipe portion and the cage each are shaped rotationally symmetric about a respective axis of rotational symmetry. In these cases, the maximal pivot angle may be defined by a maximal possible angle between said axes of rotational symmetry.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1:: an exemplary embodiment of a hand blender according to the present invention; and
- Fig. 2a - 2c:: a processing unit according to an exemplary embodiment of the present invention with its pipe portion differently pivoted relative to its cage.

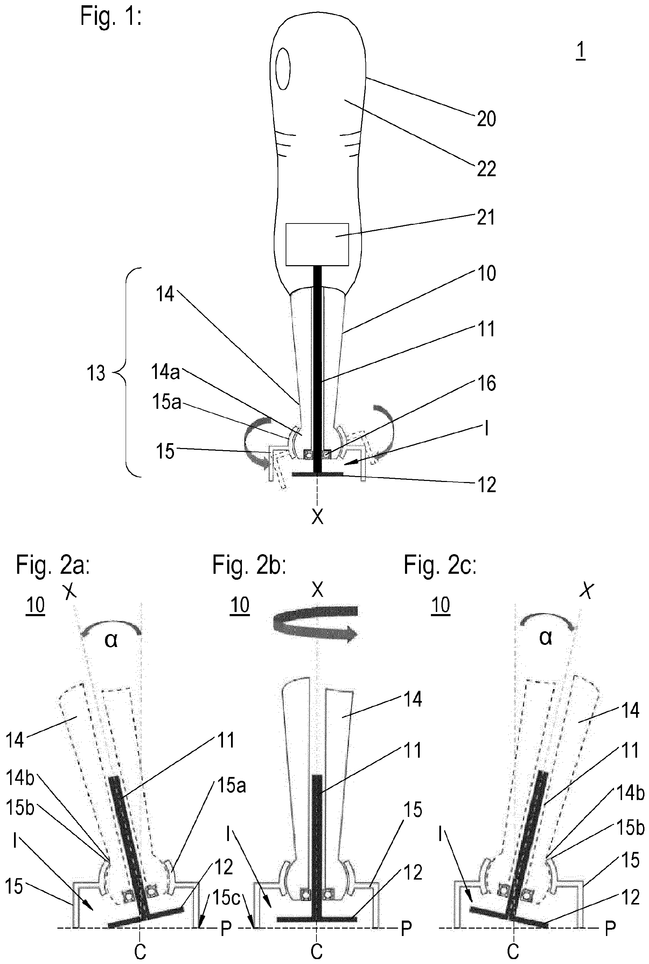

In Figure 1, a hand blender 1 according to an exemplary embodiment of the present invention is schematically illustrated in a partial cross section. The hand blender 1 comprises a processing unit 10 according to an embodiment of the present invention; in the present case, the processing unit 10 is a proper component which is detachably combined with a further component 20 of the hand blender, the further component including a drive unit 21 within a housing 22 providing a grip surface of the hand blender 1.

The processing unit 10 comprises a shaft 11, a tool 12 (such as a knife assembly), and a casing 13 with a pipe portion 14 and a cage 15. For combination of the processing unit 10 with the further component 20, the casing 13, in particular the pipe portion 14 thereof, preferably comprises combination means (not shown) such as a screw thread and/or at least one element of a bayonet connection engaging with a respective counter means (also not shown) of the housing 22.

In the depicted combined state of the processing unit 10 and the further component 20, the shaft 11 is coupled, at a first end thereof (and by means of a clutch means not shown in the figure) to the drive unit 21, which is configured to drive a rotation of the shaft 11. At an opposite (second) end of the shaft 11, the tool 12 is fixed to the shaft 11 within a cage interior space I confined by the cage 15. The shaft 11 thus is configured to transfer a rotation it may adopt from the drive unit 21 to the tool 12.

The shaft 11 runs through the pipe portion 14 and is rotatably therein by means of ball bearings 16. Therein, a longitudinal axis of the shaft 11 (which is the designated axis X of rotation) permanently coincides with a centre axis of the pipe portion 14.

As indicated in Figure 1 by arrows and dotted lines, the pipe portion 14 is pivotable relative to the cage 15. As is illustrated therewith, the hand blender is particularly advantageous for treating food in receptacles such as a bowl whose bottom surface smoothly turns (ascends) into its wall surface, to which receptacles the cage 15 can be adjusted due to its pivotability relative to the pipe portion 14 (and therewith, relative to the further component 20 connected with the pipe portion 14).

To provide for the pivotability, in the embodiment illustrated in Figure 1, the cage 15 is connected to the pipe portion 14 by means of a spherical bearing. Therein, in the present case, the cage 15 forms an exterior socket 15a retaining a partially spherical joint element 14a of the pipe portion.

In Figures 2a - 2c, the processing unit 10 is comparatively illustrated, in respective cross sections, with the cage 15 remaining in a firm position. Therein, Figure 2b shows the pipe portion 11 (with the encompassed shaft 11 and the tool 12 fixed to the shaft) in a centre position in which a centre axis C of the cage 15 coincides with the designated axis of rotation X of the shaft. In Figures 2a and 2c, the pipe portion 14 is pivoted (with the shaft 11 included therein) to respective opposite sides about a maximal pivot angle α which is delimited by an edge 15b of the cage (in particular, of its exterior socket 15a), which edge 15b faces the pipe portion 14 and abuts against a surface 14c of the pipe portion 14.

As seen from Figures 2a - 2c, due to the pivotability of the pipe portion 14 relative to the cage 15, the tool can take various positions within the cage interior space I. In particular, the tool can be moved in three dimensions. Thereby, a suction force can be varied in different regions of the cage interior space I, and a particularly uniform treatment of the respective food can be achieved.

In the present case, by limiting the pivot angle to said maximal pivot angle α, the tool 12 is ensured to be fully contained, in any accessible orientation relative to the cage 15 (i.e., in any rotational position of the tool 12 and any attainable pivot position of the pipe portion 14 relative to the cage 15), within the cage interior space I. Indeed, as indicated in Figure 2a and 2c, the tool does not protrude from a plane P defined by a cage's edge 15c at a far side of the pipe portion 14 (i.e., facing away from the pipe portion 14). Although not visible in the figures due to the cross sections, the edge 15c may be waved or serrated, thus enabling food (not shown) to enter the cage interior space even when the edge 15c is set onto a plane surface.

Accordingly, when the edge 15c of the cage 15 is set onto a plane surface of a receptacle (not shown) and the hand blender is operated, the rotating tool 12 does not strike against said surface and thus does not impair it, even if the pipe portion 14 is pivoted relative to the cage 15.

Disclosed is a processing unit 10 for/of a hand blender 1. The processing unit comprises a shaft 11, a tool 12, and a casing 13 comprising a pipe portion 14 and a cage 15. The cage 15 confines a cage interior space I and is connected to the pipe portion 14. Therein, the pipe portion 14 is pivotable relative to the cage 15. The shaft 11 at least partially runs through the pipe portion 14 and is rotatable therein about a designated axis X of rotation, and the tool 12 is fixed or fixable to the shaft 11 within the cage interior space I.

Further disclosed is a hand blender comprising such processing unit 10 and a drive unit 21 to which the shaft 11 is coupled or coupleable.

### Reference signs

- 1: hand blender

- 10: processing unit
- 11: shaft
- 12: tool
- 13: casing
- 14: pipe portion of the casing 13
- 14a: spherical joint element of the pipe portion
- 14b: surface of the pipe portion 14
- 15: cage of the casing 13
- 15a: exterior socket formed by the cage 15
- 15b: edge of the cage 15 facing the pipe portion 14
- 15c: edge of the cage 15 at the far side of the pipe portion 14
- 16: ball bearing

- 20: further component of the hand blender 1
- 21: drive unit
- 22: housing of the further component 20

- α: maximal pivot angle
- C: centre axis of the cage 15
- I: cage interior space
- P: plane defined by the edge 15c
- X: designated axis of rotation

## Claims

1. Processing unit (10) for/of a hand blender (1), the processing unit comprising a shaft (11), a tool (12), and a casing (13) with a pipe portion (14) and a cage (15), the cage (15) connected to the pipe portion (14) and confining a cage interior space (I), wherein
- the shaft (11) at least partially runs through the pipe portion (14) and is rotatable therein about a designated axis (X) of rotation, and
- the tool (12) is fixed or fixable to the shaft (11) within the cage interior space (I),
**characterised in that**
the pipe portion (14) is pivotable relative to the cage (15).

2. Processing unit according to claim 1, wherein the cage (15) is connected to the pipe portion (14) by a spherical bearing.

3. Processing unit according to one of claims 1 or 2, wherein the tool (12) fixed to the shaft (11) is fully contained in the cage interior space (I) in any rotational position of the tool (12) relative to the cage (15) and in any attainable pivot position of the pipe portion (14) relative to the cage (15).

4. Processing unit according to one of the preceding claims, wherein with regard to at least one pivot axis, the pivoting of the pipe portion (14) relative to the cage (15) is restricted to a maximal pivot angle (α).

5. Hand blender (1) comprising a drive unit (21) and a processing unit (10) according to one of the preceding claims, wherein the shaft (11) of the processing unit (10) is coupled or coupleable to the drive unit (21).
